# EUROPÄISCHE PATENTSCHRIFT

(11) **EP 3 057 842 B1**
(45) Veröffentlichungstag und Bekanntmachung des Hinweises auf die Patenterteilung: **16.05.2018**
(21) Anmeldenummer: 14787105.7
(22) Anmeldetag: 14.10.2014
(51) Int. Cl.: B60W 50/16, B60G 17/018

(54) **VERFAHREN ZUM BETRIEB EINES FAHRERASSISTENZSYSTEMS EINES KRAFTFAHRZEUGS UND KRAFTFAHRZEUG**
METHOD FOR OPERATING A DRIVER ASSISTANCE SYSTEM OF A MOTOR VEHICLE AND MOTOR VEHICLE
PROCÉDÉ PERMETTANT DE FAIRE FONCTIONNER UN SYSTÈME D'AIDE À LA CONDUITE D'UN VÉHICULE AUTOMOBILE ET VÉHICULE AUTOMOBILE

(30) Priorität: 16.10.2013 DE 102013017209
(43) Veröffentlichungstag der Anmeldung: 24.08.2016
(73) Patentinhaber: Audi AG, 85045 Ingolstadt (DE)
(72) Erfinder: LANGE, Alexander, 80538 München (DE); MÜLLER, Christoph, 97723 Oberthulba (DE); REICHEL, Michael, 85049 Ingolstadt (DE); ALBERT, Martin, 82061 Neuried (DE)
(74) Vertreter: Herbst, Matthias Heinz
(86) Internationale Anmeldenummer: PCT/EP2014/002763
(87) Internationale Veröffentlichungsnummer: WO 2015/055297

(56) Entgegenhaltungen:
- EP-A1- 1 772 339
- EP-A1- 2 216 197
- EP-A2- 2 402 225
- DE-A1-102010 035 718
- DE-A1-102010 048 822
- DE-A1-102012 002 581

## Beschreibung

Die Erfindung betrifft ein Verfahren zum Betrieb eines Fahrerassistenzsystems zur assistierten oder automatisierten Führung eines Kraftfahrzeugs, umfassend ein Fahrwerk mit wenigstens einem Aktor zur Änderung eines Wankwinkels des Kraftfahrzeugs.

Fahrerassistenzsysteme können in Kraftfahrzeugen eine Vielzahl von Fahrmanövern assistiert oder automatisiert durchführen. Automatisierte Fahrmanöver können dabei teilautomatisiert, hochautomatisiert oder vollautomatisiert durchgeführt werden. Die Benennung erfolgt nach der durch das Bundesamt für Straßenwesen (BASt) eingeführten Benennung und Klassifizierung automatisierter Fahrfunktionen (Stand 6.9.2010). Dabei wird ein durch einen Benutzer veranlasstes oder durch das Fahrerassistenzsystem unabhängig bestimmtes Fahrmanöver vollständig oder teilweise durch das Fahrerassistenzsystem gesteuert. Es ist möglich, dass eine assistierte oder automatisierte Fahrfunktion nur in bestimmten Fahrsituationen, beispielsweise zur Unfallvermeidung, durchgeführt wird. Es ist jedoch auch möglich, dass ein Fahrer einem Fahrerassistenzsystem gewisse Fahraufgaben vorgibt und die Fahraufgaben dann vom Fahrerassistenzsystem durchgeführt werden. Solche Fahraufgaben können insbesondere eine Längs- und/oder Querführung des Kraftfahrzeugs betreffen, womit es beispielsweise möglich ist, das Kraftfahrzeug ohne Eingreifen des Fahrers mit einem vorgegebenen Abstand zum vorherfahrenden Kraftfahrzeug auf einem Fahrstreifen zu bewegen.

Um eine hohe Akzeptanz für automatisierte und assistierte Fahrfunktionen zu erreichen, ist es wesentlich, dass die assistierten bzw. automatisierten Fahrfunktionen des Fahrerassistenzsystems für einen Fahrer vorhersehbar und nachvollziehbar sind. Es ist dabei bekannt, dem Fahrer akustische oder optische Hinweise über Zustände und Intentionen des Fahrerassistenzsystems zu geben. So kann beispielsweise ein vom Fahrer beauftragtes Fahrmanöver durch eine akustische Rückmeldung bestätigt werden oder optische Anzeigeelemente können Hinweise auf zukünftige Fahrmanöver anzeigen. Dabei ist es jedoch möglich, dass der Fahrer akustische Rückmeldungen als störend empfindet und optische Anzeigeelemente nicht beachtet. Insbesondere bei einem hoch- oder vollautomatisierten Fahren, bei dem ein Fahrer den Fahrbetrieb nicht dauerhaft überwachen muss, ist es möglich, dass sich ein Fahrer einer Nebenbeschäftigung widmet und daher insbesondere optische Hinweise eines Fahrerassistenzsystems weniger beachtet.

EP 2 402 225 A2 offenbart ein Verfahren zum Betrieb eines Stop&Go Systems mit automatischem Anfahren eines Kraftfahrzeugs, umfassend ein Fahrwerk mit einem Aktor zur Änderung eines Nickwinkels des Kraftfahrzeugs, wobei das Verfahren die durch das Fahrerassistenzsystem durchgeführten Schritte umfasst: Bestimmung eines zukünftigen Anfahrvorgangs in Abhängigkeit des Anfahrens von Fahrzeugen bzw. eines Fahrzeugs vor dem Vorderfahrzeug, Gabe eines Hinweises an den Fahrer, betreffend den zukünftigen Anfahrvorgang, durch Ansteuerung des Aktors zur Änderung des Nickwinkels, und Durchführung des Anfahrvorgangs durch Ansteuerung von längsführenden Fahrzeugsystemen. Aus der DE 10 2010 035 718 A1 ist ein Verfahren zum Betrieb eines Fahrerassistenzsystems eines Kraftfahrzeugs bekannt, welches eine die Aufmerksamkeit des Fahrers auf eine seitliche Richtung lenkende Warnung und/oder einen die Aufmerksamkeit des Fahrers auf eine seitliche Richtung lenkenden Hinweis ausgibt, wobei die Warnung und/oder der Hinweis durch eine von der Richtung abhängige Veränderung des Wankwinkels des Kraftfahrzeugs erzeugt wird.

Der Erfindung liegt die Aufgabe zugrunde ein Verfahren anzugeben um einen Fahrer zuverlässig auf Zustände und/oder Intentionen eines Fahrerassistenzsystems hinzuweisen, wobei dieser Hinweis insbesondere nicht als störend empfunden wird.

Die Aufgabe wird erfindungsgemäß durch ein Verfahren der eingangs genannten Art gelöst, wobei das Verfahren die durch das Fahrerassistenzsystem durchgeführten Schritte umfasst:
- Bestimmung eines zukünftigen Fahrmanövers in Abhängigkeit erfasster Bedienhandlungen des Fahrers und/oder erfasster Umfelddaten und/oder einer Vorgabe eines Navigationssystems,
- Gabe eines Hinweises an den Fahrer, betreffend das zukünftige Fahrmanöver, durch Ansteuerung des Aktors zur Änderung des Wankwinkels, und
- Durchführung des Fahrmanövers durch Ansteuerung von längsführenden und/oder querführenden Fahrzeugsystemen.

Dem Verfahren liegt die Idee zugrunde, die wahrnehmbaren Querbeschleunigungen, die durch ein aktives Wanken des Kraftfahrzeugs herbeigeführt werden können, zur Information des Fahrers bezüglich eines zukünftigen Fahrmanövers zu nutzen. Dabei kann die aktive Wankbewegung sowohl genutzt werden um eine Bedienhandlung des Fahrers, in deren Abhängigkeit ein zukünftiges Fahrmanöver bestimmt wird, zu bestätigen, als auch um dem Fahrer einen konkreten Hinweis auf ein bevorstehendes Fahrmanöver zu geben.

Der Aktor kann zusätzlich zur Änderung eines Nickwinkels des Kraftfahrzeugs dienen, wobei der Aktor zur Änderung des Nickwinkels und des Wankwinkels angesteuert werden kann, um einen Hinweis an den Fahrer zu geben.

Durch ein kontrolliertes Wanken bzw. Wanken und Nicken kann auch ein Systemzustand des Fahrerassistenzsystems für den Fahrer erfassbar gemacht werden. So ist es beispielsweise möglich, dass ein zukünftiges Fahrmanöver geplant ist, das insbesondere vom Fahrer beauftragt ist, momentan eine Durchführung dieses Manövers jedoch noch nicht möglich ist. Das Fahrerassistenzsystem befindet sich in diesem Fall in einem Wartezustand, in dem es wartet, bis das Manöver durchführbar ist. Der Fahrer kann im erfindungsgemäßen Verfahren auf einen solchen Wartezustand beispielsweise dadurch hingewiesen werden, dass eine wiederholte Ansteuerung des Aktors zur Änderung des Wankwinkels bzw. des Wankwinkels und des Nickwinkels erfolgt und damit eine periodische oder pseudoperiodische Wankbewegung bzw. Nick- und Wankbewegung erzeugt wird oder auch dadurch, dass der Wankwinkel bzw. der Wankwinkel und der Nickwinkel des Kraftfahrzeugs durch Ansteuerung des Aktors verändert wird und solange verändert bleibt, bis das Fahrmanöver durchgeführt wird oder bis die Durchführung des Fahrmanövers endgültig unmöglich ist.

Es ist dabei möglich, dass die Gabe des Hinweises und die Durchführung des Fahrmanövers durch ein Zeitintervall von wenigstens 500 ms, insbesondere wenigstens 1 s, beabstandet sind. Die Beabstandung des Hinweises von der Durchführung des Fahrmanövers ermöglicht es, dass ein Fahrer zunächst erkennen kann, dass ein Fahrmanövers bevorsteht, bevor dies ausgeführt wird. Dadurch wird ein Fahrer besser in die assistierte oder automatisierte Führung des Kraftfahrzeugs eingebunden und vom Fahrerassistenzsystem durchgeführte Fahrmanöver werden besser nachvollziehbar. Dabei ist es selbstverständlich möglich, das Zeitintervall in Abhängigkeit von das Umfeld betreffenden Umfelddaten, das Kraftfahrzeug selbst betreffend Egodaten oder Ähnlichem anzupassen. So ist es offensichtlich für sicherheitskritische Fahrmanöver häufig nicht möglich, den Fahrer mit einem ausreichenden Zeitabstand vorzuwarnen. Daher ist es insbesondere möglich, dass bei der Bestimmung eines zukünftigen Fahrmanövers zugleich ermittelt wird, ob die Durchführung des Fahrmanövers zeitkritisch ist, in welchem Fall die Durchführung des Fahrmanövers direkt erfolgt, oder ob eine Verzögerung des Fahrmanövers möglich ist, in welchem Fall zunächst ein Hinweis an den Fahrer gegeben wird und erst nach einem vorgegebenen Zeitintervall nach Gabe des Hinweises die Durchführung des Fahrmanövers erfolgt.

Es ist dabei möglich, dass nach Bestimmung des zukünftigen Fahrmanövers der Hinweis einmalig durch eine kurzzeitige Änderung des Wankwinkels bzw. des Wankwinkels und des Nickwinkels ausgegeben wird. Hierzu kann zur Gabe des Hinweises der Aktor für ein vorgegebenes Zeitintervall mit einem vorgegebenen oder fahrmanöverabhängig bestimmten Signal zur Änderung des Wankwinkels bzw. des Wankwinkels und des Nickwinkels angesteuert werden. Das Zeitintervall kann dabei insbesondere kürzer als 3 s und im Speziellen kürzer als 1 s sein. Das Signal kann dabei insbesondere derart ausgebildet sein, dass die Änderung des Nickwinkels und/oder des Wankwinkels in Form eines kurzen Rucks erfolgt, der dem Fahrer in einem kurzen Zeitintervall einen klaren Hinweis auf das Bevorstehen eines Fahrmanövers gibt. Insbesondere kann die Ansteuerung des Aktors derart erfolgen, dass die Richtung und/oder die Stärke und/oder der zeitliche Ablauf des Nickens und/oder Wankens des Kraftfahrzeugs einen Hinweis auf die Art oder auf weitere Parameter des zukünftigen Fahrmanövers geben.

Alternativ ist es möglich, dass zur Gabe des Hinweises der Aktor solange mit einem vorgegebenen oder fahrmanöverabhängig bestimmten Signal zur Änderung des Wankwinkels bzw. des Wankwinkels und des Nickwinkels angesteuert wird, bis die Durchführung des Fahrmanövers beginnt. Dabei kann das Signal insbesondere den Aktor periodisch ansteuern, so dass eine wiederholte Durchführung einer bestimmten Änderung des Wankwinkels bzw. des Wankwinkels und des Nickwinkels erfolgt. Es ist jedoch auch möglich, dass der Aktor zunächst über einen vorgegebenen Zeitraum derart angesteuert wird, dass er eine vorgegebene oder fahrmanöverabhängig bestimmte Stellung einnimmt, die anschließend bis zum Beginn der Durchführung des Fahrmanövers gehalten wird, und bei Beginn der Durchführung des Fahrmanövers der Aktor so angesteuert wird, dass er seine ursprüngliche Stellung, die er vor Gabe des Hinweises hatte, oder eine andere fahrsituationsabhängige Stellung einnimmt. Damit wird bei Bestimmung des zukünftigen Fahrmanövers, insbesondere bereits bei Erfassung einer Bedienhandlung des Fahrers, die ein zukünftiges Fahrmanöver vorgibt, ein Wankwinkel bzw. ein Wankwinkel und ein Nickwinkel angepasst, um den Fahrer darauf hinzuweisen, dass ein bestimmtes Fahrmanöver bevorsteht, jedoch noch nicht durchgeführt wird und bei Durchführung dieses Fahrmanövers wird der Wank- bzw. Nickwinkel zurückgesetzt.

Es ist dabei möglich, dass das Fahrmanöver ein Fahrstreifenwechsel in einen Zielfahrstreifen ist. Dabei kann der Aktor insbesondere derart angesteuert werden, dass das Kraftfahrzeug durch die Änderung des Wankwinkels seitlich in Richtung des Zielfahrstreifens geneigt wird. Diese Neigung in Richtung des Zielfahrstreifens kann als einmaliges Wanken nach Bestimmung des Fahrmanövers, als wiederholtes Wanken mit vorgegebenem zeitlichen Abstand bis zur Durchführung des Fahrstreifenwechsels oder als eine dauerhafte Änderung des Wankwinkels bis zur Durchführung des Fahrstreifenwechsels erfolgen.

Es ist insbesondere möglich, dass das zukünftige Fahrmanöver durch eine Bedienhandlung des Fahrers veranlasst ist. In diesem Fall dient der Hinweis als eine Rückmeldung des Fahrerassistenzsystems, dass die Bedienhandlung des Fahrers erfasst wurde und ein durch die Bedienhandlung veranlasstes Fahrmanöver zukünftig erfolgen wird. Dies ist insbesondere vorteilhaft, wenn die Durchführung des Fahrmanövers momentan aufgrund der Verkehrssituation oder der Straßenführung nicht möglich ist.

Es ist daher möglich, dass nach Erfassen der Bedienhandlung die Umfelddaten wiederholt erfasst werden und die Ausführbarkeit des Fahrmanövers in Abhängigkeit der Umfelddaten überprüft wird, wobei das Fahrmanöver durchgeführt wird, sobald dessen Ausführbarkeit ermittelt wurde. Dabei wird aus den Umfelddaten sowie weiteren Daten wie den Fahrzeugabmessungen, einem Sollabstand zu weiteren Objekten oder Ähnlichem, für eine jeweilige Verkehrssituation ermittelt, ob ein vom Fahrer beauftragtes Manöver momentan möglich ist oder nicht. Um den Zeitraum zwischen dem Wunsch des Fahrers zur Einleitung des Manövers und damit der Bedienhandlung des Fahrers und der Durchführung des Fahrmanövers zu überbrücken, kann, wie oben beschrieben, während des gesamten Zeitintervalls von der Bedienhandlung bis zur Durchführung des Fahrmanövers eine Ansteuerung des Aktors zur Hinweisgabe erfolgen.

Des Weiteren betrifft die Erfindung ein Kraftfahrzeug, umfassend ein Fahrerassistenzsystem, das zur vollautomatisierten oder teilautomatisierten Führung des Kraftfahrzeugs ausgebildet ist, sowie ein Fahrwerk, wobei das Fahrwerk wenigstens einen Aktor zur Anpassung eines Nickwinkels und/oder eines Wankwinkels des Kraftfahrzeugs umfasst, und wobei das Fahrerassistenzsystem zur Durchführung eines der oben beschriebenen Verfahren ausgebildet ist.

Der Aktor kann dabei ein Aktor eines aktiven Federungssystems oder eines aktiven Stabilisierungssystems des Kraftfahrzeugs sein. Derartige Aktoren können zugleich durch weitere Fahrzeugsysteme genutzt werden, insbesondere Systeme zur Einstellung der Fahrwerkseigenschaften oder zur Fahrzeugstabilisierung.

Weitere Vorteile und Einzelheiten der Erfindung ergeben sich aus den folgenden Ausführungsbeispielen sowie den zugehörigen Zeichnungen. Dabei zeigen:
- Fig. 1: ein Ablaufdiagramm eines Ausführungsbeispiels des erfindungsgemäßen Verfahrens,
- Fig. 2: ein Ablaufdiagramm eines weiteren Ausführungsbeispiels des erfindungsgemäßen Verfahrens, und
- Fig. 3: ein erfindungsgemäßes Kraftfahrzeug.

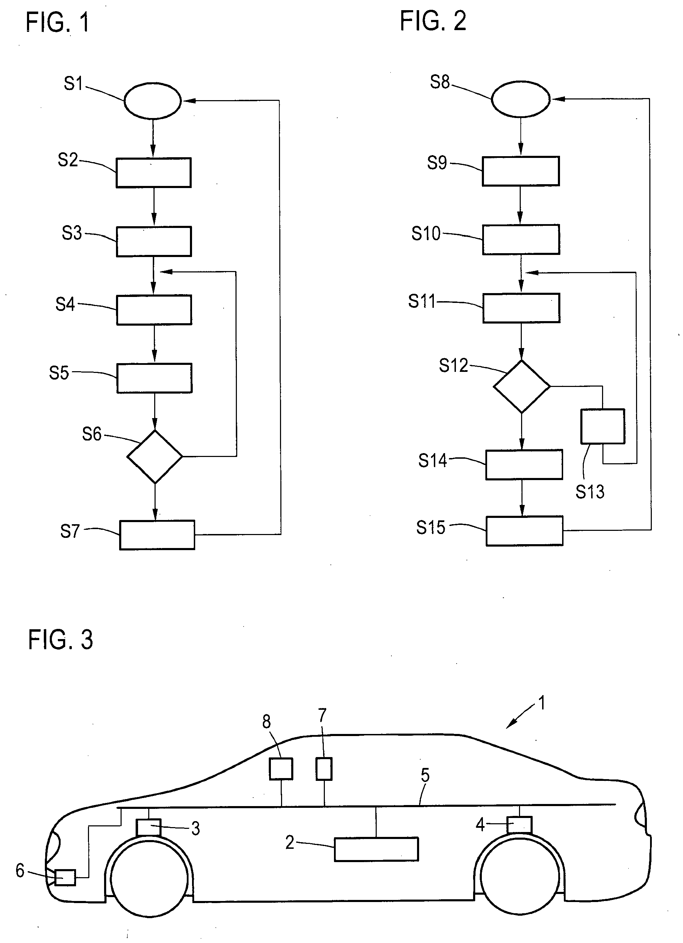

Fig. 1 zeigt ein Ablaufdiagramm eines Ausführungsbeispiels für ein Verfahrens zum Betrieb eines Fahrerassistenzsystems. In Schritt S1 ist dabei zunächst kein Fahrmanöver durch das Fahrerassistenzsystem geplant. Dabei ist es möglich, dass die Fahrzeugführung in Schritt S1 beim Fahrer des Kraftfahrzeugs liegt, es ist jedoch auch möglich, dass bereits ein assistierter oder automatisierter Fahrbetrieb durchgeführt wird, wobei jedoch kein konkretes Fahrmanöver durch das Fahrerassistenzsystem geplant ist, auf das ein Fahrer hingewiesen werden soll.

In Schritt S2 wird ein zukünftiges Fahrmanöver in Abhängigkeit einer erfassten Bedienhandlung des Fahrers und/oder erfasster Umfelddaten geplant. Der Anlass der Planung eines solchen Fahrmanövers kann eine Bedieneingabe sein, beispielsweise wenn ein Fahrer bei einer assistierten oder automatisierten Führung des Kraftfahrzeugs eine Bedieneingabe tätigt, die einen Fahrstreifenwechsel, ein Abbiegen des Kraftfahrzeugs oder Ähnliches herbeiführen soll. Es ist jedoch auch möglich, dass die Planung eines solchen Fahrmanövers durch Erfassung von Umfelddaten verursacht ist, beispielsweise wenn ein Fahrerassistenzsystem in die Steuerung des Kraftfahrzeugs eingreift um das Kraftfahrzeug um ein erkanntes Hindernis zu führen. Wesentlich ist dabei, dass sich durch die Bedienhandlung oder die Auswertung von erfassten Umfelddaten der Zustand eines Fahrerassistenzsystems derart geändert hat, dass ein zukünftiges Fahrmanöver geplant ist.

In Schritt S3 gibt das Fahrerassistenzsystem einen Hinweis an den Fahrer, der dem Fahrer signalisiert, dass ein Fahrmanöver geplant ist. Wurde das Fahrmanöver aufgrund erfasster Umfelddaten geplant, dient ein solcher Hinweis dem Fahrer als Vorwarnung, so dass dieser durch ein unerwartetes Fahrmanöver des Kraftfahrzeugs nicht überrascht ist. Wurde das Fahrmanöver durch eine Bedienhandlung des Fahrers eingeleitet, so dient die Gabe des Hinweises insbesondere dazu, dem Fahrer zu signalisieren, dass seine Bedienhandlung erfasst wurde und ein entsprechendes Fahrmanöver geplant ist. Dies ist besonders vorteilhaft, da vom Fahrer gewünschte Fahrmanöver häufig nicht sofort durchgeführt werden können, wodurch der Eindruck bei dem Fahrer entstehen kann, dass seine Bedieneingabe nicht registriert wurde. Dies kann durch Gabe einer entsprechenden Rückmeldung vermieden werden.

Zur Gabe des Hinweises wird ein Aktor des Kraftfahrzeugs angesteuert, um den Wankwinkel bzw. den Wankwinkel und den Nickwinkel des Kraftfahrzeugs zu verändern.

Dabei kann vorteilhaft ein Aktor eines aktiven Federungssystems oder eines aktiven Stabilisierungssystems des Kraftfahrzeugs angesteuert werden. Das Signal zur Ansteuerung des Aktors ist dabei abhängig vom geplanten Fahrmanöver. So kann ein geplantes Steuern nach links oder rechts durch ein Wanken des Kraftfahrzeugs in die entsprechende Richtung signalisiert werden. Darüber hinaus können weitere Manöver signalisiert werden. Beispielsweise kann ein Wenden des Kraftfahrzeugs durch eine kreisförmige Bewegung des Fahrzeugaufbaus angedeutet werden oder Ähnliches.

Der Hinweis wird durch eine Ansteuerung des Aktors mit einem entsprechenden Fahrmanöverabhängigen Signal über einen relativ kurzen Zeitraum von 1 bis 2 s gegeben. Dadurch führt der Aufbau des Kraftfahrzeugs eine für den Fahrer klar erkennbare Bewegung durch, die auf das zukünftige Fahrmanöver hinweist, es werden jedoch ruckartige Bewegungen vermieden. Alternativ wäre es auch möglich, den Aktor nur über ein sehr kurzes Zeitintervall anzusteuern und damit eine kurze ruckartige Bewegung zu erzeugen und den Fahrer damit sehr schnell auf ein zukünftiges Fahrmanöver hinzuweisen.

Nach Gabe des Hinweises an den Fahrer wird in Schritt S4 für ein kurzes Warteintervall gewartet. Wurde ein zukünftiges Fahrmanöver geplant, dessen Durchführung nicht zeitkritisch ist, so kann dieses Warteintervall wenigstens eine Sekunde lang sein, um dem Fahrer eine ausreichende Reaktionszeit zur Wahrnahme und Verarbeitung des Hinweises zu geben, bevor das Fahrmanöver durchgeführt wird. Es ist dabei in Schritt S5 jedoch selbstverständlich möglich, das Warteintervall zu verkürzen, wenn die zeitnahe Durchführung des zukünftigen Fahrmanövers notwendig sein sollte.

In Schritt S5 werden anschließend Umfelddaten erfasst bzw. vorhandene Umfelddaten aktualisiert. Dabei kann die Erfassung der Umfelddaten auch schon während des Warteintervalls in Schritt S4 erfolgen. Durch Auswertung der Umfelddaten wird in Schritt S6 überprüft, ob das zukünftige Fahrmanöver in der momentanen Fahrsituation durchführbar ist. So kann beispielsweise durch eine Bedienhandlung des Fahrers ein Fahrstreifenwechsel oder ein Abbiegen des Kraftfahrzeugs gewünscht sein oder ein weiteres Fahrzeugsystem, wie beispielsweise ein Navigationssystem kann, insbesondere bei einer hoch- oder vollautomatisierten Führung des Kraftfahrzeugs, einen Fahrstreifenwechsel oder ein Abbiegen beauftragen. Dabei kann es jedoch möglich sein, dass die Spur auf die gewechselt werden soll, momentan durch einen weiteren Verkehrsteilnehmer belegt ist oder Ähnliches. Ist das zukünftige Fahrmanöver momentan nicht möglich, so wird das Verfahren mit Schritt S4, d. h. einem weiteren Warteintervall fortgesetzt. Wurde in Schritt S6 jedoch ermittelt, dass das Fahrmanöver möglich ist, so wird es in Schritt S7 ausgeführt.

Konkrete Verfahren zur Planung der Überprüfung der Ausführbarkeit und der Ausführung von assistierten und automatisierten Fahrmanövern sind im Stand der Technik bekannt und sollen hier nicht erläutert werden.

Fig. 2 zeigt ein Ablaufdiagramm eines alternativen Verfahrens zum Betrieb eines Fahrerassistenzsystems. Wesentlicher Unterschied zu dem mit Bezug auf Fig. 1 erläuterten Verfahren ist, dass nun nicht ein kurzer einmaliger Hinweis an den Fahrer gegeben wird, sobald ein zukünftiges Fahrmanöver bestimmt wurde, sondern dass ein kontinuierlicher oder periodischer Hinweis auf das zukünftige Fahrmanöver erfolgt, bis mit der Durchführung des Fahrmanövers begonnen wird.

Schritt S8 und Schritt S9 entsprechen dabei den mit Bezug auf Fig. 1 erläuterten Schritten S1 und S2. Nach der Bestimmung des zukünftigen Fahrmanövers in Schritt S9 wird in Schritt S10 ein Hinweis an den Fahrer gegeben, indem mit der Ansteuerung des Aktors zur Gabe des Hinweises begonnen wird. Die Gabe des Hinweises über einen längeren Zeitraum ist insbesondere in zwei Formen möglich. So kann eine Ansteuersequenz für den Aktor periodisch wiederholt werden, wobei die Wiederholung entweder kontinuierlich erfolgt oder die einzelnen Wiederholungen voneinander beabstandet werden können. So ist es beispielsweise möglich, dass bei einem geplanten Fahrstreifenwechsel nach links das Kraftfahrzeug im Sekundentakt nach links wankt. Alternativ ist eine Ansteuerung in drei Phasen möglich, wobei in einer ersten Phase am Anfang der Ansteuerung der Aktor derart angesteuert wird, dass er über ein vorgegebenes Zeitintervall in eine bestimmte Stellung verbracht wird, diese Stellung während der zweiten Phasen gehalten wird und in einer dritten Phase der Aktor bei Beendigung der Hinweisgabe über ein vorgegebenes Zeitintervall zurück in die Ursprungsstellung gebracht wird.

Nach Beginn der Hinweisgabe in Schritt S10 werden in Schritt S11 die Umfelddaten erfasst oder aktualisiert. Nach Erfassung der Umfelddaten wird in Schritt S12 überprüft, ob das Fahrmanöver möglich ist. Die Schritt S11 und S12 entsprechen dabei den mit Bezug auf Fig. 1 beschriebenen Schritten S5 und S6. Wesentlicher Unterschied ist hierbei jedoch, dass die Schritte S11 und S12 während der Gabe des Hinweises durchgeführt werden.

Wird in Schritt S12 ermittelt, dass das Fahrmanöver momentan nicht möglich ist, so wird in Schritt S13 für ein kurzes Warteintervall gewartet, bevor in Schritt S11 erneut Umfelddaten ermittelt oder aktualisiert werden. Wird in Schritt S12 ermittelt, dass das Fahrmanöver ausführbar ist, so wird in Schritt S14 die Hinweisgabe beendet, wobei eine periodische Wiederholung einer Ansteuerung des Aktors unterbrochen wird und die Aktorstellung in die Ursprungsstellung zurückgeführt wird oder die dritte Phase der Signalgabe eingeleitet wird, in der der Aktor in die Ursprungsstellung zurückgeführt wird und anschließend oder während der Rückführung des Aktors in die Ursprungsstellung wird in Schritt S15 das Fahrmanöver ausgeführt. Nach Ausführung des Fahrmanövers kann das Verfahren wiederum in Schritt S8 fortgesetzt werden.

Fig. 3 zeigt schematisch ein Kraftfahrzeug 1 das ein Fahrerassistenzsystem 2 zur vollautomatisierten oder teilautomatisierten Führung des Kraftfahrzeugs 1 umfasst. Zur voll- oder teilautomatisierten Führung des Kraftfahrzeugs 1 kann das Fahrerassistenzsystem 2, beispielsweise über den CAN-Bus 5, eine Vielzahl von nicht gezeigten Fahrzeugsystemen zur Durchführung von Fahrmanövern ansteuern. Dabei übernimmt das Fahrerassistenzsystem 2 insbesondere die vollständige Längs- und Querführung des Kraftfahrzeugs.

Dem Fahrerassistenzsystem 2 stehen die Umfelddaten zahlreicher Umfeldsensoren zur Verfügung, wovon der als Kamera 6 ausgebildete Umfeldsensor gezeigt ist. Zudem werden durch das Fahrerassistenzsystem 2 die Bedienhandlungen am Bedienelement 7 erfasst. Das Fahrerassistenzsystem 2 kann zudem , insbesondere im hoch- oder vollautomatisierten Fahrbetrieb, durch das Navigationssystem 8 angewiesen werden, Fahrmanöver durchzuführen. Erkennt das Fahrerassistenzsystem durch Auswertung der Umfelddaten die Notwendig eines Fahrmanövers oder wird durch das Navigationssystem 8 oder eine Bedienhandlung am Bedienelement 7 ein zukünftiges Fahrmanöver vorgegeben, so ist das Fahrerassistenzsystem ausgebildet, durch Ansteuerung der Aktoren 3 und 4, die Teil des aktiven Federungssystems des Kraftfahrzeugs sind, sowie zweier weiterer nicht gezeigter Aktoren auf der anderen Seite des Kraftfahrzeugs einen Hinweis auf das zukünftige Fahrmanöver an den Fahrer zu geben. Dabei können Aktoren 3 und 4 beispielsweise gleichläufig angesteuert werden um zu einer Wankbewegung des Kraftfahrzeugs zu führen oder gegenläufig um zu einer Nickbewegung des Kraftfahrzeugs zu führen. Die Ansteuerung der Aktoren erfolgt wie zu Fig. 1 bzw. wie zu Fig. 2 erläutert.

## Patentansprüche

1. Verfahren zum Betrieb eines Fahrerassistenzsystems (2) zur assistierten oder automatisierten Führung eines Kraftfahrzeugs (1), umfassend ein Fahrwerk mit wenigstens einem Aktor (3, 4) zur Änderung eines Wankwinkels des Kraftfahrzeugs (1), wobei das Verfahren die durch das Fahrerassistenzsystem (2) durchgeführten Schritte umfasst:
- Bestimmung eines zukünftigen Fahrmanövers in Abhängigkeit erfasster Bedienhandlungen des Fahrers und/oder erfasster Umfelddaten und/oder einer Vorgabe eines Navigationssystems (8),
- Gabe eines Hinweises an den Fahrer, betreffend das zukünftige Fahrmanöver, durch Ansteuerung des Aktors (3, 4) zur Änderung des Wankwinkels, und
- Durchführung des Fahrmanövers durch Ansteuerung von längsführenden und/oder querführenden Fahrzeugsystemen.

2. Verfahren nach Anspruch 1,
**dadurch gekennzeichnet,**
**dass** der Aktor zusätzlich zur Änderung eines Nickwinkels des Kraftfahrzeugs dient, wobei der Aktor zur Änderung des Nickwinkels und des Wankwinkels angesteuert wird, um den Hinweis an den Fahrer zu geben.

3. Verfahren nach Anspruch 1 oder 2,
**dadurch gekennzeichnet,**
**dass** die Gabe des Hinweises und die Durchführung des Fahrmanövers durch ein Zeitintervall von wenigstens 500 ms, insbesondere wenigstens 1s, beabstandet sind.

4. Verfahren nach Anspruch 2 und nach Anspruch 3, wenn abhängig vom Anspruch 2,
**dadurch gekennzeichnet,**
**dass** zur Gabe des Hinweises der Aktor (3, 4) für ein vorgegebenes Zeitintervall mit einem vorgegebenen oder fahrmanöverabhängig bestimmten Signal zur Änderung der Nickwinkels und/oder der Wankwinkels angesteuert wird.

5. Verfahren nach einem der Ansprüche 2 und 4 und nach Anspruch 3, wenn abhängig vom Anspruch 2,
**dadurch gekennzeichnet,**
**dass** zur Gabe des Hinweises der Aktor (3, 4) solange mit einem vorgegebenen oder fahrmanöverabhängig bestimmten Signal zur Änderung des Nickwinkels und/oder des Wankwinkels angesteuert wird, bis die Durchführung des Fahrmanövers beginnt.

6. Verfahren nach einem der vorangehenden Ansprüche,
**dadurch gekennzeichnet,**
**dass** das Fahrmanöver ein Fahrstreifenwechsel in einen Zielfahrstreifen ist.

7. Verfahren nach Anspruch 6,
**dadurch gekennzeichnet,**
**dass** der Aktor (3, 4) derart angesteuert wird, dass das Kraftfahrzeug (1) durch die Änderung des Wankwinkels seitlich in Richtung der Zielfahrspur geneigt wird.

8. Verfahren nach einem der vorangehenden Ansprüche,
**dadurch gekennzeichnet,**
**dass** das zukünftige Fahrmanöver durch eine Bedienhandlung des Fahrers veranlasst ist.

9. Verfahren nach Anspruch 8,
**dadurch gekennzeichnet,**
**dass** nach Erfassen der Bedienhandlung die Umfelddaten wiederholt erfasst werden, und die Ausführbarkeit des Fahrmanövers in Abhängigkeit der Umfelddaten überprüft wird, wobei das Fahrmanöver durchgeführt wird, sobald dessen Ausführbarkeit ermittelt wird.

10. Kraftfahrzeug, umfassend ein Fahrerassistenzsystem (2), das zur assistierten oder automatisierten Führung des Kraftfahrzeugs (1) ausgebildet ist, sowie ein Fahrwerk, wobei das Fahrwerk wenigstens einen Aktor (3, 4) zur Anpassung eines Nickwinkels und/oder eines Wankwinkels des Kraftfahrzeugs (1) umfasst,
**dadurch gekennzeichnet,**
**dass** das Fahrerassistenzsystem (2) zur Durchführung des Verfahrens nach einem der vorangehenden Ansprüche ausgebildet ist.

11. Kraftfahrzeug nach Anspruch 10,
**dadurch gekennzeichnet,**
**dass** der Aktor (3, 4) ein Aktor (3, 4) eines aktiven Federungssystems oder eines aktiven Stabilisierungssystems des Kraftfahrzeugs (1) ist.

## Claims

1. Method for operating a driver assistance system (2) for the assisted or automated driving of a motor vehicle (1), comprising a chassis with at least one actuator (3, 4) for changing a roll angle of the motor vehicle (1), wherein the method comprises the steps performed by the driver assistance system (2):
- determining a future driving manoeuvre depending on the detected user activity of the driver and/or detected environmental data and/or specification of a navigation system (8),
- notifying the driver about the future driving manoeuvre by controlling the actuator (3, 4) to change the roll angle, and
- performing the driving manoeuvre by controlling lengthways and/or sideways guiding vehicle systems.

2. Method according to claim 1,
**characterised in that**
the actuator is also used for changing a pitch angle of the motor vehicle, wherein the actuator is controlled for changing the pitch angle and the roll angle in order to notify the driver.

3. Method according to claim 1 or 2,
**characterised in that**
there is a time interval of at least 500 ms, in particular at least 1s, between the provision of the notification and performing the driving manoeuvre.

4. Method according to claim 2 and according to claim 3, if dependent on claim 2, **characterised in that**
for providing notification the actuator (3, 4) is controlled for a predefined time interval by a predefined or driving manoeuvre-dependent specific signal for changing the pitch angle and/or the roll angle.

5. Method according to any of claims 2 and 4 and according to claim 3, if dependent on claim 2,
**characterised in that**
for providing notification the actuator (3, 4) is controlled by a predetermined or driving-manoeuvre dependent signal for changing the pitch angle and/or the roll angle until the driving manoeuvre begins.

6. Method according to any of the preceding claims,
**characterised in that**
the driving manoeuvre consists of changing the traffic lane to a target lane.

7. Method according to claim 6,
**characterised in that**
the actuator (3, 4) is controlled such that the motor vehicle (1) is angled laterally in the direction of the target lane by changing the roll angle.

8. Method according to any of the preceding claims,
**characterised in that**
the future driving manoeuvre is set by the user activity of the driver.

9. Method according to claim 8,
**characterised in that**
after detecting the user activity the environmental data is detected again and the feasibility of the driving manoeuvre is checked as a function of the environmental data, wherein the driving manoeuvre is performed as soon as its feasibility has been determined.

10. Motor vehicle, comprising a driver assistance system (2), which is designed for the assisted or automated driving of the motor vehicle (1), as well as a chassis, wherein the chassis comprises at least one actuator (3, 4) for adjusting a pitch angle and/or a roll angle of the motor vehicle (1),
**characterised in that**
the driver assistance system (2) is designed for performing the method according to any of the preceding claims.

11. Motor vehicle according to claim 10,
**characterised in that**
the actuator (3, 4) is an actuator (3, 4) of an active suspension system or an active stabilisation system of the motor vehicle (1).

## Revendications

1. Procédé de fonctionnement d'un système d'assistance au conducteur (2) pour le guidage assisté ou automatisé d'un véhicule automobile (1), comprenant un châssis avec au moins un actionneur (3, 4) pour la modification d'un angle de roulis du véhicule automobile (1), dans lequel le procédé comporte les étapes réalisées par le système d'assistance au conducteur (2) :
- la détermination d'une manoeuvre de conduite future en fonction de manipulations de commande détectées du conducteur et/ou données environnementales détectées et/ou une prescription d'un système de navigation (8),
- la fourniture d'une indication au conducteur, concernant la manoeuvre de conduite future, par commande de l'actionneur (3, 4) pour la modification de l'angle de roulis, et
- la réalisation de la manoeuvre de conduite par commande de systèmes de véhicule à guidage longitudinal et/ou à guidage transversal.

2. Procédé selon la revendication 1,
**caractérisé en ce que**
l'actionneur sert en outre à la modification d'un angle de tangage du véhicule automobile, dans lequel l'actionneur est commandé pour la modification de l'angle de tangage et de l'angle de roulis afin de fournir l'indication au conducteur.

3. Procédé selon la revendication 1 ou 2,
**caractérisé en ce que**
la fourniture de l'indication et la réalisation de la manoeuvre de conduite sont espacées par un intervalle de temps d'au moins 500 ms, en particulier d'au moins de 1 s.

4. Procédé selon la revendication 2 et la revendication 3 lorsqu'elle dépend de la revendication 2,
**caractérisé en ce**
**que** pour la fourniture de l'indication l'actionneur (3, 4) est commandé pour un intervalle de temps prescrit avec un signal prescrit ou déterminé en fonction de la manoeuvre de conduite pour la modification de l'angle de tangage et/ou de l'angle de roulis.

5. Procédé selon l'une quelconque des revendications 2 et 4 et la revendication 3, lorsqu'elle dépend de la revendication 2,
**caractérisé en ce**
**que** pour la fourniture de l'indication l'actionneur (3, 4) est commandé avec un signal prescrit ou déterminé en fonction de la manoeuvre de conduite pour la modification de l'angle de tangage et/ou de l'angle de roulis jusqu'à ce que la réalisation de la manoeuvre de conduite commence.

6. Procédé selon l'une quelconque des revendications précédentes,
**caractérisé en ce**
**que** la manoeuvre de conduite est un changement de voie de circulation dans une voie de circulation cible.

7. Procédé selon la revendication 6,
**caractérisé en ce**
**que** l'actionneur (3, 4) est commandé de telle manière que le véhicule automobile (1) soit incliné par la modification de l'angle de roulis latéralement en direction de la voie de circulation cible.

8. Procédé selon l'une quelconque des revendications précédentes,
**caractérisé en ce**
**que** la manoeuvre de conduite future est provoquée par une manipulation de commande du conducteur.

9. Procédé selon la revendication 8,
**caractérisé en ce**
**qu'**après la détection de la manipulation de commande les données environnementales sont détectées de manière répétée, et la capacité de réalisation de la manoeuvre de conduite est vérifiée en fonction des données environnementales, dans lequel la manoeuvre de conduite est réalisée dès que sa capacité de réalisation est déterminée.

10. Véhicule automobile, comprenant un système d'assistance au conducteur (2) qui est réalisé pour le guidage assisté ou automatisé du véhicule automobile (1), ainsi qu'un châssis, dans lequel le châssis comporte au moins un actionneur (3, 4) pour l'adaptation d'un angle de tangage et/ou d'un angle de roulis du véhicule automobile (1),
**caractérisé en ce**
**que** le système d'assistance au conducteur (2) est réalisé pour la réalisation du procédé selon l'une quelconque des revendications précédentes.

11. Véhicule automobile selon la revendication 10,
**caractérisé en ce**
**que** l'actionneur (3, 4) est un actionneur (3, 4) d'un système de suspension actif ou d'un système de stabilisation actif du véhicule automobile (1).
